# EUROPEAN PATENT SPECIFICATION

(11) **EP 2 753 581 B1**
(45) Date of publication and mention of the grant of the patent: **06.04.2016**
(21) Application number: 12745706.7
(22) Date of filing: 13.08.2012
(51) Int. Cl.: C02F 1/66, C02F 1/68, B01D 61/12

(54) **A WATER PURIFICATION SYSTEM**
WASSERAUFBEREITUNGSSYSTEM
SYSTÈME DE PURIFICATION D'EAU

(30) Priority: 07.09.2011 IN MM24922011
(43) Date of publication of application: 16.07.2014
(73) Proprietor: Unilever N.V., 3013 AL Rotterdam (NL); Unilever PLC, London, Greater London EC4Y 0DY (GB)
(72) Inventor: DAVE, Parthiv Ripudaman, Mumbai 400 099 (IN); NALAWADE, Shrikant Popat, Mumbai 400 099 (IN); SAKSENA, Skand, Mumbai 400 099 (IN)
(74) Representative: van den Brom, Coenraad Richard
(86) International application number: PCT/EP2012/065791
(87) International publication number: WO 2013/034396

(56) References cited:
- WO-A1-2009/135113
- GB-A- 2 169 276
- JP-A- 61 283 392
- JP-A- 63 039 696
- KR-A- 20110 003 952
- KR-B1- 100 920 124
- RU-C1- 2 170 044
- US-A- 5 837 136
- US-A1- 2011 132 840
- GEORGE VAROS CHILINGAR: "Classification of limestones and dolomites on basis of Ca/Mg ratio", JOURNAL OF SEDIMENTARY PETROLOGY, TULSA, OK, US, vol. 27, no. 2, 1 June 1957 (1957-06-01), pages 187-189, XP008157625, ISSN: 0022-4472, DOI: 10.1306/74D7069B-2B21-11D7-8648000102C1865 D

## Description

### Field of the invention

The invention relates to a device and method for purification of water using Reverse Osmosis (RO) membrane.

### Background of the invention

RO membranes and devices are being used widely in the water purification industry. RO devices work on the principle of reduction in dissolved solids from the input water. Water has a particular taste partly because of the dissolved solids. Removal of dissolved solids beyond a certain point may adversely affect the taste. Similarly, if higher amount of dissolved solids remain in the output water (also called permeate), the taste of water may still be unpalatable at least to some consumers. Therefore, in order to adjust the taste of permeate water, remineralisation means are used in some RO devices.

US7507334 B1 (SIGONA JON-ANDREW VINCENT, 2009) discloses a modular-filter based RO water treatment system that remineralizes purified water twice to ensure the water is alkaline, but uses only one remineralization filter made of calcite. Calcium carbonate causes drastic increase in total dissolved solids (TDS), which may render the water unpalatable at least to some consumers. It also discloses that reverse osmosis filters remove on an average 98 % sediments, organics and dissolved salts and reduce the pH to about 6.2 to 6.8 with only 5 to 15 ppm of dissolved salts. The remineralisation filter containing mineral calcite raises the pH to about 7.0 and dissolved salts to about 30 on an average and finally the pH to about 7.5 to 8.5 and total solids to 60 ppm.

JP 61283392 (Mitsubishi heavy IND Ltd., 1986) discloses that freshwater from reverse osmosis is passed through a filter of a charged layer containing at least of one of limestone or dolomite particles. The pH value of the feed water to reverse osmosis is adjusted to control the hardness of the beverage water from the filter.

RU2170044 (Borodjanskij, 2001), discloses a process in which tap water is subjected to primary purification and then to reverse-osmosis purification, acidified to pH 4.5-5.5, passed through a double-bed filtration charge. The double-bed charge consists of crushed quartz support and partly calcined dolomite with particle size 2.5-4.5 mm. When passed through filtration charge, water is saturated with calcium and magnesium hydrocarbonates until a mineralization between 50 and 1500 mg/l is attained.

JP63039696 (JGC Corp, 1988), discloses a method of passing water that has been subjected to reverse osmosis through alkaline materials comprising mainly CaCO₃ such as limestone, coral, sand, dolomite and the like to adjust the pH of the water.

KR100920124 (Hankook Jungsoo Ind Co, Ltd., 2009) discloses a method of producing alkaline water including the steps of pulverizing dolomite, selecting the dolomite of 3mm ~ 10mm among the pulverized dolomite; plasticizing the selected dolomite at a temperature of 750 ~ 950 degrees; filling the dolomite in a column; passing purified water through the column and a micro filter; and producing alkaline water in which calcium and magnesium are simultaneously added.

US2011/0132840 (Wasaki Masahiro, et al., 2011) discloses an improved method for remineralizing desalinated water. The desalination system includes, but is not limited to, a conventional reverse osmosis membrane system, forward osmosis membrane system, electro dialysis system, Multi Stage Flash (MSF) system, and Multi Effect Distillation (MED) system.

'Classification of limestones and dolomites on basis of Ca/Mg ratio", (Chilingar, J. sedimentary Petrology, vol 27, no. 2, 1957), discloses a new classification of dolomites and limestones on the basis of Ca/Mg ratios with some divisions dictated by the ratios which are determined by the mode of formation.

WO2009135113 (Kinetico Inc., 2009), discloses a process of re-mineralizing treated potable water that has had hardness components removed by dissolving a magnesium compound in the treated water. The resulting concentration of magnesium, pH level and alkalinity level are controlled by the inclusion of a calcium compound such as calcium carbonate and a bypass orifice. The bypass orifice allows a portion of pretreated wafer to bypass a filter that contains the magnesium compound. The process is particularly useful as an in-line process for continuous or semi-continuous treatment of water. The preferred magnesium and calcium compounds include magnesium phosphate dibasic trihydrate and calcium carbonate, respectively.

We have determined that a certain combination of calcium carbonate and magnesium carbonate provides controlled increase in TDS irrespective of the TDS levels in the input water, thereby making the water palatable.

The cited prior art does not disclose how to maintain uniform TDS level in the output water that has been purified using a reverse osmosis process where there is significant variation in the TDS levels of the input water. This is important considering the fact that there may be significant variation in the TDS levels from various sources of water.

It is thus an object of the present invention to design a filter cartridge to ensure that the TDS level in the water purified by a reverse osmosis membrane is maintained within a range of 25 to 200 ppm (parts per million) irrespective of the TDS levels in the input water.

It is another object of the present invention to provide a filter cartridge that provides sustained release of TDS over a typical lifetime of an RO membrane which is generally about 8,000 to 10,000 litres.

### Summary of the invention

According to a first aspect disclosed is a device for purification of water having:
(i) a reverse-osmosis membrane; and,
(ii) downstream thereof, a cartridge comprising calcium carbonate and magnesium carbonate,
wherein the ratio of calcium carbonate to magnesium carbonate is from 95:5 to 60:40.

According to a second aspect disclosed is a process for purifying water, the process having the steps of:
(i) passing water having total dissolved solids of 100 to 2000 ppm through a reverse-osmosis membrane; followed by,
(ii) passing the water through a cartridge having calcium carbonate and magnesium carbonate,
wherein, the ratio of calcium carbonate to magnesium carbonate is from 95:5 to 60:40,

According to a further aspect disclosed is the use in water purification of a cartridge comprising calcium carbonate particles and magnesium carbonate particles whereby the ratio of calcium carbonate to magnesium carbonate is from 95:5 to 60:40 for providing an increase in the total dissolved solids level of purified water obtained by passing water through a reverse osmosis membrane.

For better understanding of the invention, reference should be made to the detailed description of preferred embodiments.

### Detailed description of the invention

RO devices are conventionally used at places where the total dissolved solids (TDS) of water are high. However, nowadays, such devices are also being used at places where the TDS may not be high. Generally, the TDS of surface water e.g., water that comes from lakes and reservoirs ranges from 70 to 120 ppm. On the other hand TDS of river or stream water ranges from 250 to 500 ppm. At some places, underground water, e.g. bore-well water is supplied. This water, by far, has very high TDS which may range from 500 to 2000 ppm.
While some amount of dissolved solids lend water its characteristic taste. TDS less than 25 ppm or more than 200 ppm may make it unpalatable to some consumers.

Reverse osmosis (RO) is a membrane filtration method that removes many types of large molecules and ions from solutions by applying pressure to the solution when it is on one side of a selective membrane. The result is that the solute is retained on the pressurized side of the membrane and the pure solvent is allowed to pass to the other side. To be "selective," this membrane should not allow large molecules or ions through the pores (holes), but should allow smaller components of the solution (such as water) to pass freely.
In the normal osmosis process the solvent naturally moves from an area of low solute concentration, through a membrane, to an area of high solute concentration. The movement of a pure solvent to equalize solute concentrations on each side of a membrane generates osmotic pressure. Applying an external pressure to reverse the natural flow of pure solvent, thus, is reverse osmosis. Reverse osmosis, however, involves a diffusive mechanism so that separation efficiency is dependent on solute concentration, pressure, and water flux rate. Reverse osmosis is most commonly known for its use in drinking water purification from seawater, removing the salt and other substances from the water molecules.

Conventional RO membranes are known to remove about 90 % TDS from the input water. Therefore, in some cases, the output water (permeate) may have as low as 4 to 5 ppm TODS which may be perceived unacceptably biter. On the other hand, if the TDS of input water is about 2000 ppm; the permeate having TDS more than 200 ppm may be perceived salty.

Therefore, in order to balance the TDS of the permeate water, some RO devices use remineralisation means. The drawbacks of known remineralisation means of calcite (calcium carbonate) have been explained earlier.

We have determined that a certain combination of calcium carbonate and magnesium carbonate provides controlled increase in TDS thereby making the water palatable. Without wishing to be bound by theory it is believed that the combination provides sustained release of TDS over a typical lifetime of an RO membrane which is generally about 8,000 to 10,000 litres and it provides consistent increase in TDS irrespective of flow rates. An increase of 10 to 30 ppm, preferably 10 to 25 ppm is desirable. This effect has been observed with experiments performed on test water designed to replicate three different sources of water with varying TDS.

Thus in a first aspect disclosed is a device for purification of water having:
(i) a reverse-osmosis membrane; and,
(ii) downstream thereof, a cartridge comprising calcium carbonate and magnesium carbonate,
wherein the ratio of calcium carbonate to magnesium carbonate is from 95:5 to 60:40.

Preferably, this ratio is 95:5 to 70:30. At the preferred ratio there is greater control on the TDS of the permeate water.

According to another aspect disclosed is a process for purifying water, the process having the steps of:
(i) passing water comprising total dissolved solids of 100 to 2000 ppm through a reverse-osmosis membrane; followed by,
(ii) passing the water through a cartridge comprising calcium carbonate and magnesium carbonate,
wherein the ratio of calcium carbonate to magnesium carbonate is from 95:5 to 60:40.

The preferred ratio of calcium carbonate to magnesium carbonate 95:5 to 70:30 and at the preferred ratio it is possible to get greater control on the TDS of the permeate water.

Further preferably, the particle size of each of the calcium carbonate and the magnesium carbonate is from 800 to 1800 µm. Higher particle size is not preferred because of less increase in TDS which may be regarded as insignificant as far as contribution to taste is concerned. On the other hand, smaller particle size is not preferred for two reasons. First, the increase in TDS may be uncontrolled. Second, the flow-rate may be adversely affected, especially as the lifetime of typical RO membranes is about 8,000 to 10,000 litres. Without wishing to be bound by theory it is believed that particle size offsets the difference in solubility of the salts.

From a taste point-of-view, output water (permeate) having 25 to 200 ppm TDS may generally be considered palatable.

The cartridge used is a standard cartridge that is used in water purifiers and has an inlet and outlet. The cartridge used in the present invention is filled with a mixture of calcium carbonate and magnesium carbonate at ratio from 95:5 to 60:40 and preferably having particle size of 800 to 1800 µm.

While any desired amount of calcium carbonate and magnesium carbonate may be used in the cartridge; it is preferred that the cartridge includes, on a combined basis, 100 to 300 g of the calcium carbonate and magnesium carbonate. This amount may be enough to fill standard-sized cartridges that are used in household water purifiers.

RO membranes are commercially available for industrial and domestic use. The RO membranes may be made in a variety of configurations, with the most preferred configuration being the TFC (thin film composite). A preferred RO membrane is FILMTEC^{™} Membranes Product TW30-1812-50 from The Dow Chemical Company. For the device to function efficiently, it may be necessary to increase the pressure of the input water. For this a pump may be used. Inlet pressure of 80 psig or more is preferred.

The water purification device may preferably also have a sediment filter for pretreatment generally placed before the RO membrane. Such filters may be made of woven or non-woven cloth or a carbon block. The fabric may be made of natural fibers or of synthetic origin. Non-woven cloth made of cotton, polyester, polypropylene, or nylon is preferred. A typical carbon block includes bound activated carbon particles.

It is preferred that the particle size of each of the calcium carbonate and the magnesium carbonate is from 800 to 1800 µm, more preferably 800 to 1700 µm. It is also preferred that the cartridge includes, on a combined basis, 100 to 300 g of said calcium carbonate and magnesium carbonate.

It has been observed that the pH of water treated by the calcium carbonate and magnesium carbonate increases by 0.6 to 0.7, which is highly desirable.

The invention will now be demonstrated with examples. The examples are for the purpose of illustration only and do not limit the scope of the invention in any manner.

### Examples

### Example-1: Effect of varying ratio of calcium carbonate and magnesium carbonate and effect of their particle sizes on TDS

A standard cartridge having an inlet and outlet for water was filled with 150 g of the material (mixture of calcium carbonate and magnesium carbonate) described in table-1. Experiments were conducted by varying ratio of calcium carbonate to magnesium carbonate. In addition to the ratio, the particle size of calcium carbonate and magnesium carbonate was also varied to study its effect on TDS of output water. To prepare the mixture of calcium and magnesium carbonate, first the individual salts were sieved to get particles of desired size and then the sieved particles were mixed in the required proportion. For example, to obtain a 95:5 mixture of calcium carbonate and magnesium carbonate of 500 µm size; first the calcium carbonate particles were sieved to get particles of 500 µm. Thereafter, magnesium carbonate particles were sieved to get particles of 500 µm size. Then these particles were mixed at ratio of 95:5 to get the mixture. The cartridge was fitted into a standard RO water purification device, downstream (i.e. after) the RO membrane. Purified water that passed through the RO membrane (FILMTEC^{™} Membranes Product TW30-1812-50 from DOW Chemicals) and the cartridge was collected in a built-in storage chamber. The TDS of a sample of the water that collected was measured by conductivity method (IS 3025 Part 16). The data (TDS) is presented in table-1. The TDS of input test water was 500 ppm

**Table-1**

| | Increase in TDS/ppm | | | | | | |
|---|---|---|---|---|---|---|---|
| CaCO₃: MgCO₃ in the cartridge | 500 µm | 700 µm | 800 µm | 1500 µm | 1700 µm | 1800 µm | 2000 µm |
| 100 % CaCO₃ | 60 | 58 | 55 | 53 | 50 | 48 | 45 |
| 98:2 | 40 | 38 | 30 | 25 | 28 | 17 | 11 |
| 95:5 | 38 | 35 | 25 | 23 | 19 | 15 | 10 |
| 90:10 | 35 | 31 | 25 | 22 | 22 | 14 | 10 |
| 80:20 | 33 | 30 | 26 | 21 | 21 | 12 | 9 |
| 70:30 | 33 | 29 | 23 | 20 | 20 | 11 | 9 |
| 60:40 | 32 | 30 | 20 | 15 | 15 | 10 | 7 |
| 55:45 | 31 | 25 | 15 | 10 | 8 | 8 | 6 |

The data in table-1 indicates that merely using particles of 500 to 2000 µm calcium carbonate (Calcite) as described in US7507334 B1, led to drastic increase in TDS. The increase was in the range of 45 to 60 ppm which may make the water unpalatable to some consumers. Mixture of calcium carbonate and magnesium carbonate at ratio of 98:2 also led to drastic increase in TDS at lower particle sizes (500 to 700 µm), but the increase in TDS at higher particle sizes was in the preferred range. Therefore, the effect could not be seen across the range of particle size. The technical effect on TDS was clearly observed at ratios of 95:5, 90:10, 80:20, 70:30 and 60:40. When the particle size of the mixture was 800 to 1800 µm (the preferred particle size range) and when the ratio was 95:5 to 60:40 (the preferred ratios), TDS increased by 10 to 25 ppm, which is the highly preferred range. At the higher particle size of 2000 µm, the increase in TDS was found to be very low, especially at higher ratios. Further, at the ratio of 55:45 also, the increase in TDS was very high at lower particle sizes and very low at higher particle sizes.

### Example-2: Effect of quality of input water on TDS at different ratios

In another experiment, the TDS of input water was changed to simulate water from different sources. The experiment was conducted at two ratios of calcium carbonate to magnesium carbonate, i.e. 98:2 and 80:20. In addition to TDS, in this experiment, the pH of output water was also measured. Further, for comparative analysis, an experiment was also conducted on a standard RO device which did not have any post-treatment cartridge.

**Table-2**

| | I/W 80 ppm TDS | | I/W 500 ppm TDS | | I/W 2000 ppm TDS | |
|---|---|---|---|---|---|---|
| Ratio 98:2 | 1 | 2 | 1 | 2 | 1 | 2 |
| pH of output water | 6.8 | 7.7 | 6.1 | 7.5 | 6.2 | 7.8 |
| Increase in TDS through cartridge | 10 | | 25 | | 40 | |
| Ratio 80:20 | 1 | 2 | 1 | 2 | 1 | 2 |
| pH of output water | 6.8 | 7.4 | 6.1 | 6.8 | 6.2 | 6.7 |
| Increase in TDS through cartridge | 20 | | 21 | | 22 | |

### Note: In Table-2

I/W means input water; 1 means water passed through RO membrane only (no post-treatment cartridge) and 2 means water passed through RO membrane and cartridge.

The data in table-2 indicates that at ratio of 98:2, the increase in TDS in the case of input water of 2000 ppm TDS was unacceptably high. On the other hand, at the preferred ratio of 80:20, the increase was around 20 ppm even when the input water simulated underground or bore-well water which may have up to 2000 ppm TDS. This indicates that at preferred ratio of calcium carbonate to magnesium carbonate, the increase in TDS was almost constant, thereby allowing for use of such a method to purify input water from a wide range of sources.

Further, the increase in pH at preferred ratio of 80:20 was around 0.6, which was also within the desirable range. This increased much higher in the case where the ratio was 98:2.

### Example-3: Effect of quality of input water on TDS at different ratios and measurement of total TDS of water

An experiment, similar to Example-2 was conducted by choosing two preferred ratios of calcium carbonate to magnesium carbonate. This experiment was conducted at two different TDS of input water - 80 ppm and 500 ppm and the TDS of output water was measured twice; once after passing through the RO membrane only and the next time after passing through the cartridge also. The values of TDS before and after the cartridge were used to calculate the difference, and thereby the increase in TDS. The data is shown in table-3.

**Table-3**

| Ratio of calcium carbonate to magnesium carbonate and TDS of input water | TDS after passing through RO membrane only | TDS after passing through the cartridge | Difference in TDS |
|---|---|---|---|
| 95:5 | 5 | 28 | 23 |
| 80 ppm | 5 | 29 | 24 |
| 80:20 | 5 | 26 | 21 |
| 80 ppm | 5 | 26 | 21 |
| 95:5 | 15 | 38 | 23 |
| 500 ppm | 15 | 37 | 22 |
| 80:20 | 15 | 35 | 20 |
| 500 ppm | 15 | 36 | 21 |
| 95:5 | 90 | 113 | 23 |
| 2000 ppm | 90 | 114 | 24 |
| 80:20 | 90 | 111 | 21 |
| 2000 ppm | 90 | 112 | 22 |

The data in table-3 indicates that the final TDS (i.e. TDS after passing through the cartridge was well within the acceptable range of 25 to 200, irrespective of the TDS present in input water.

The illustrated examples provides a filter cartridge which balances the TDS levels of water which has been purified by a reverse osmosis membrane is maintained within a range of 25 to 200 ppm irrespective of the TDS levels in the input water.

The illustrated examples also provide a filter cartridge which gives sustained release of TDS over a typical lifetime of an RO membrane which is generally about 8,000 to 10,000 litres.

Although the invention has been described with reference to specific embodiments, it will be appreciated by those skilled in the art that the invention may be embodied in many other forms.

## Claims

1. A device for purification of water comprising:
(i) a reverse-osmosis membrane; and,
(ii) downstream thereof, a cartridge comprising calcium carbonate and magnesium carbonate,
wherein the ratio of calcium carbonate to magnesium carbonate is from 95:5 to 60:40.

2. A device as claimed in claim 1 wherein said ratio is from 95:5 to 70:30.

3. A device as claimed in claim 1 or 2 wherein particle size of each of said calcium carbonate and said magnesium carbonate is from 800 to 1800 µm.

4. A device as claimed in any one of the preceding claims wherein said cartridge comprises, on a combined basis, 100 to 300 g of said calcium carbonate and magnesium carbonate.

5. A process for purifying water, said process comprising the steps of:
(i) passing water comprising total dissolved solids of 100 to 2000 ppm through a reverse-osmosis membrane; followed by,
(ii) passing said water through a cartridge comprising calcium carbonate and magnesium carbonate,
wherein, the ratio of calcium carbonate to magnesium carbonate is from 95:5 to 60:40.

6. A process as claimed in claim 5 wherein said ratio is from 95:5 to 70:30.

7. A process as claimed in claim 5 or 6 wherein particle size of each of said calcium carbonate and said magnesium carbonate is from 800 to 1800 µm.

8. A process as claimed in any one of the preceding claims 5 to 7 wherein said cartridge comprises, on a combined basis, 100 to 300 g of said calcium carbonate and magnesium carbonate.

9. Use in water purification of a cartridge comprising calcium carbonate particles and magnesium carbonate particles whereby the ratio of calcium carbonate to magnesium carbonate is from 95:5 to 60:40 for providing an increase in the total dissolved solids level of purified water obtained by passing water through a reverse osmosis membrane.

10. Use according to claim 9, whereby the increase in the total dissolved solids level is by 10 to 25 ppm.

11. Use according to claim 9, wherein for providing water that has been passed through a reverse osmosis membrane with a total dissolved solids level of between 25 and 200 ppm.

## Patentansprüche

1. Vorrichtung zur Wasseraufbereitung, umfassend
(i) eine Umkehrosmose-Membran und
(ii) stromabwärts davon eine Kartusche, umfassend Calciumcarbonat und Magnesiumcarbonat,
wobei das Verhältnis von Calciumcarbonat zu Magnesiumcarbonat 95:5 bis 60:40 beträgt.

2. Vorrichtung nach Anspruch 1, wobei das Verhältnis 95:5 bis 70:30 beträgt.

3. Vorrichtung nach Anspruch 1 oder 2, wobei die Teilchengröße des Calciumcarbonats und des Magnesiumcarbonats jeweils 800 bis 1800 µm beträgt.

4. Vorrichtung nach irgendeinem der vorhergehenden Ansprüche, wobei die Kartusche, auf einer kombinierten Basis, 100 bis 300 g des Calciumcarbonats und Magnesiumcarbonats umfasst.

5. Verfahren zur Wasseraufbereitung, wobei das Verfahren die Schritte umfasst:
(i) Führen des Wassers, das 100 bis 2000 ppm insgesamt gelöste Feststoffe umfasst, durch eine Umkehrosmose-Membran, gefolgt vom
(ii) Führen des Wassers durch eine Kartusche, die Calciumcarbonat und Magnesiumcarbonat umfasst,
wobei das Verhältnis von Calciumcarbonat zu Magnesiumcarbonat 95:5 bis 60:40 beträgt.

6. Verfahren nach Anspruch 5, wobei das Verhältnis 95:5 bis 70:30 beträgt.

7. Verfahren nach Anspruch 5 oder 6, wobei die Teilchengröße des Calciumcarbonats und des Magnesiumcarbonats jeweils 800 bis 1800 µm beträgt.

8. Verfahren nach irgendeinem der vorhergehenden Ansprüche 5 bis 7, wobei die Kartusche, auf einer kombinierten Basis, 100 bis 300 g des Calciumcarbonats und Magnesiumcarbonats umfasst.

9. Verwendung einer Kartusche zur Wasseraufbereitung, umfassend Calciumcarbonat-Teilchen und Magnesiumcarbonat-Teilchen, wobei das Verhältnis des Calciumcarbonats zum Magnesiumcarbonat 95:5 bis 60:40 beträgt, um einen Anstieg des Anteils an insgesamt gelösten Feststoffen des aufbereiteten Wassers, erhalten durch das Führen von Wasser durch eine Umkehrosmose-Membran, zu erreichen.

10. Verwendung nach Anspruch 9, wobei der Anstieg des Anteils an insgesamt gelösten Feststoffen 10 bis 25 ppm beträgt.

11. Verwendung nach Anspruch 9 zur Bereitstellung von Wasser, das durch eine Umkehrosmose-Membran geführt worden ist, mit einem Anteil an insgesamt gelösten Feststoffen von 25 bis 200 ppm.

## Revendications

1. Dispositif de purification d'eau comprenant :
(i) une membrane d'osmose inverse ; et,
(ii) en aval de celle-ci, une cartouche comprenant du carbonate de calcium et du carbonate de magnésium,
dans lequel le rapport de carbonate de calcium à carbonate de magnésium est de 95:5 à 60:40.

2. Dispositif selon la revendication 1, dans lequel ledit rapport est de 95:5 à 70:30.

3. Dispositif selon la revendication 1 ou 2, dans lequel la taille de particule de chacun dudit carbonate de calcium et dudit carbonate de magnésium est de 800 à 1 800 µm.

4. Dispositif selon l'une quelconque des revendications précédentes, dans lequel ladite cartouche comprend, sur une base combinée, de 100 à 300 g desdits carbonate de calcium et carbonate de magnésium.

5. Procédé de purification d'eau, ledit procédé comprenant les étapes consistant :
(i) à faire passer de l'eau comprenant des matières solides dissoutes totales de 100 à 2 000 ppm à travers une membrane d'osmose inverse, puis
(ii) à faire passer ladite eau à travers une cartouche comprenant du carbonate de calcium et du carbonate de magnésium,
dans lequel, le rapport de carbonate de calcium à carbonate de magnésium est de 95:5 à 60:40.

6. Procédé selon la revendication 5, dans lequel ledit rapport est de 95:5 à 70:30.

7. Procédé selon la revendication 5 ou 6, dans lequel la taille de particule de chacun dudit carbonate de calcium et dudit carbonate de magnésium est de 800 à 1 800 µm.

8. Procédé selon l'une quelconque des revendications 5 à 7 précédentes, dans lequel ladite cartouche comprend, sur une base combinée, de 100 à 300 g desdits carbonate de calcium et carbonate de magnésium.

9. Utilisation dans une purification d'eau d'une cartouche comprenant des particules de carbonate de calcium et des particules de carbonate de magnésium, le rapport de carbonate de calcium à carbonate de magnésium est par-là de 95:5 à 60:40 pour fournir une augmentation de la teneur en matières solides dissoutes totales d'eau purifiée obtenue en faisant passer de l'eau à travers une membrane d'osmose inverse.

10. Utilisation selon la revendication 9, sur quoi l'augmentation de la teneur en matières solides dissoutes totales est de 10 à 25 ppm.

11. Utilisation selon la revendication 9, dans laquelle pour fournir de l'eau qui est passée à travers une membrane d'osmose inverse avec une teneur en matières solides dissoutes totales comprise entre 25 et 200 ppm.
